# EUROPEAN PATENT APPLICATION

(11) **EP 0 580 391 A1**
(43) Date of publication of application: **26.01.1994**
(21) Application number: 93305661.6
(22) Date of filing: 19.07.1993
(51) Int. Cl.: B23K 9/20

(54) **Gun head for weld gun**

(30) Priority: 17.07.1992 JP 50286/92
(71) Applicant: EMHART INC., Newark, Delaware 19711 (US)
(72) Inventor: Suzuki, Shinji, Toyohashi City Aichi-Ken (JP)
(74) Representative: Wetters, Basil David Peter (GB)

(57) **Abstract**

In order to provide a gun head of stud welder (weld gun) which maintains a proper lifting height and at the same time prevents defective welding resulting from spatter, a gun head (11) has a collet (12) to hold, place and lift a stud, and is attached movably along a gun slide (13) fixed to the body of a weld gun. It welds the stud to a workpiece (5) by lifting the stud held by the collet (12) to a predetermined height from the workpiece and after producing an arc discharge across the stud and the workpiece, presses the stud onto a portion of the workpiece and of the stud melted by the arc discharge. The gun head (11) is provided with transition means to move the entire gun head along the gun slide 13 toward the workpiece over a distance equal to the maximum stroke (14) so as to bring the weld stud into surface-contact with the workpiece and an electric current established therebetween, and lifting means to lift the collet to the predetermined height while the moved gun head is held in that position.

## Description

The present invention relates to a weld gun to weld a stud to a workpiece or base material, and particularly to a gun head for a stud welder.

In apparatus for arc welding components such as weld studs or plugs to workpieces, a stud or plug is placed on to a workpiece by a weld gun which is moved from the workpiece in a lift stroke in which a pilot arc is ignited and returned to the workpiece in a plunge stroke during the burning of an interconnected welding arc. Welding is effected by the connection through the pool of melt formed from the component and the workpiece after the welding arc is extinguished.

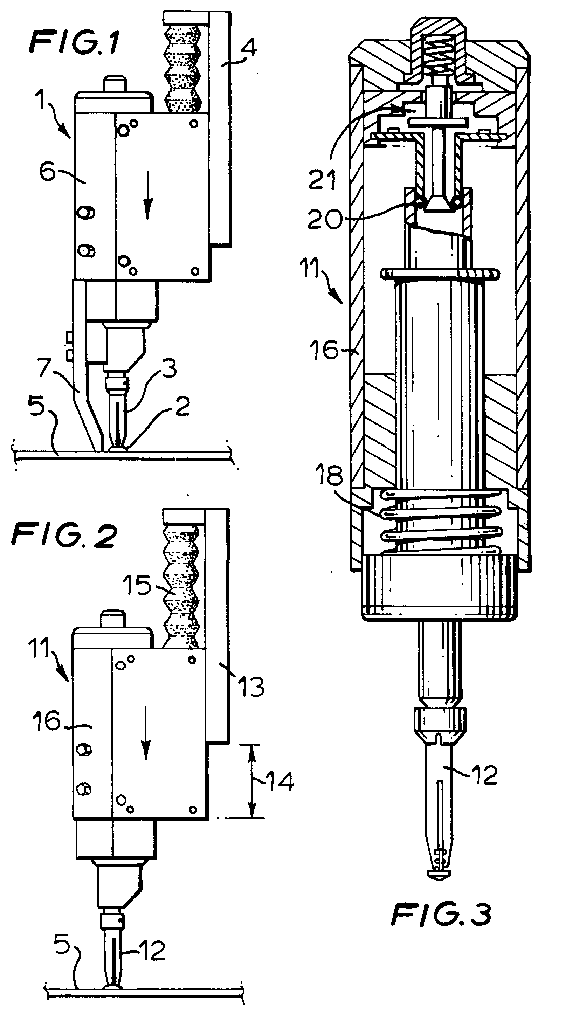

Weld guns for welding threaded studs or the like to a workpiece or base material such as a metal panel are well known. Such a weld gun has a gun head attached to it movably through a gun slide. Such a gun head is shown in Figure 1 of the accompanying drawings. A gun head (1) has a collet (3) to hold, place and lift a stud (2) and is arranged to move along a gun slide (4). The following steps are taken to weld the stud to a workpiece (5): a stud held by collet (3) is brought into surface-contact with the workpiece and an electric current established therebetween. Then, after lifting it up to a predetermined lifting height, an arc is lit between the stud and the workpiece and the stud is pressed in the direction indicated by the arrow onto a portion of the workpiece and of the stud melted by the arc discharge to weld it to the workpiece.

In the conventional gun head (1) of a weld gun, the lifting height for producing an arc discharge is obtained by causing a workpiece position detection rod (7), which is fixed to a gun head body (6) and extends along the collet (3), to abut against the workpiece and lifting the stud from that position to a predetermined height. Initially, the lifting height is correct since it is measured from the actual position of the workpiece. Defective welding sometimes occurs, however, and a spatter produced during welding tends to stick to the end of the detection rod (7) and the welding current is diverted to the spatter.

Accordingly, it is an object of the present invention to provide a gun head for a weld gun that maintains a precise lifting height and prevents defective welding resulting from spatter.

According to the present invention, there is provided a gun head for a weld gun having a collet to hold, place and lift a stud and attached movably along a gun slide fixed to the body of the stud welder, for welding the stud to a workpiece by lifting the stud held by the collet from the workpiece in a lift stroke in which a pilot arc is ignited and returned to the workpiece in a plunge stroke during the burning of an interconnected welding arc, welding being effected by the connection through the pool of melt formed from the component and the workpiece after the welding arc is extinguished, characterised in that the gun head has transition means to bring the stud held by the collet into surface-contact with the workpiece by moving the entire gun head along the gun slide toward the workpiece over a distance equal to the maximum stroke of the slide and an electric current established therebetween, and lifting means to lift the collet to the predetermined lifting height while the body of the gun head moved over a distance equal to the maximum stroke is kept in that position.

The arrangement of the invention enables the plunge to be effected positively instead of using the reactive force of a spring when the solenoid power is cut and this can be achieved over controlled times, distances and speeds.

In order that the invention be better understood, a preferred embodiment will now be described in greater detail by way of example with reference to the accompanying drawings in which:-
Figure 1 is a front view of a conventional (known) gun head;
Figure 2 is a front view of a gun head according to the invention, and
Figure 3 is a vertical sectional view of the gun head of Figure 2.

In Figure 2, a gun head (11) of a weld gun according to the present invention has a collet (12) to hold, place and lift a stud, and is movably attached along a gun slide (13) fixed to the body of the weld gun. The gun head (11) produces an arc discharge across the stud and a workpiece (5) after lifting the stud held by the collet to a predetermined height from the workpiece and presses the stud onto a portion of the workpiece and of the stud melted by the arc discharge so as to weld the stud to the workpiece.

The gun head (11) of the weld gun according to the present invention is provided with transition means (15) to bring the stud held by the collet into surface-contact with the workpiece by moving the entire gun head (11) along the gun slide (13) toward the workpiece (5) over a distance equal to the maximum stroke of the gun slide (13) (see arrow 14). The transition means (15) is composed of electric drive means such as a linear motor or mechanical drive means such as a spring.

The gun head (11) is further provided with lifting means to lift the collet (12) together with the stud to a predetermined height while a body (16) of the gun head moved over the distance equal to the maximum stroke is kept in that position. Figure 3 shows the internal structure of the gun head (11). The collet (12) is ordinarily pressed downward by a spring (18). A portion extending upward from the collet (12) is provided with an armature (20), above which a lift coil device (21) is attached to the body (16). When the lift coil device (21) is energised, the armature (20) is raised to lift the collet (12). The raised height is a predetermined lifting height and the stud is lifted from the workpiece to this height.

According to the present invention, the gun head of the invention has transition means which moves it along the gun slide over a distance equal to the maximum stroke to bring the stud into surface-contact with the workpiece, and lifting means to lift the collet to a predetermined height while the moved gun head body is kept in that position. Therefore, diversion of an electric current due to spatter can be prevented since there is no need to provide a detection rod. Thus, a proper lifting height is kept and at the same time, defective welding resulting from spatter can be avoided, as well as improving weld quality.

## Claims

1. A gun head of weld gun having a collet to hold, place and lift a stud is attached movably along a gun slide fixed to the body of the stud welder for welding the stud to a workpiece by lifting the stud held by the collet from the workpiece in a lift stroke in which a pilot arc is ignited and returned to the workpiece in a plunge stroke during the burning of an interconnected welding arc, welding being effected by the connection through the pool of melt formed from the component and the workpiece after the welding arc is extinguished, characterised in that the gun head has transition means to bring the stud held by the collet into surface-contact with the workpiece by moving the entire gun head along said gun slide toward the workpiece over a distance equal to the maximum stroke of the slide and an electric current established therebetween, and lifting means to lift the collet to the predetermined lifting height while the body of the gun head moved over a distance equal to the maximum stroke is kept in that position.
